# EUROPÄISCHE PATENTSCHRIFT

(11) **EP 2 165 875 B1**
(45) Veröffentlichungstag und Bekanntmachung des Hinweises auf die Patenterteilung: **11.07.2012**
(21) Anmeldenummer: 09167975.3
(22) Anmeldetag: 17.08.2009
(51) Int. Cl.: B60K 15/067, B60R 11/00, F01N 13/18, B60K 13/04, B60K 13/02

(54) **Befestigungseinrichtung, insbesondere bei Kraftfahrzeugen**
Mounting device, esp. for motor vehicles
Dispositif de fixation, notamment pour véhicule automobile

(30) Priorität: 17.09.2008 DE 102008047470
(43) Veröffentlichungstag der Anmeldung: 24.03.2010
(73) Patentinhaber: J. Eberspächer GmbH & Co. KG, 73730 Esslingen (DE)
(72) Erfinder: Krause, Michael, 73095 Albershausen (DE); Gräter, Nicolas, 88045 Friedrichshafen (DE)
(74) Vertreter: BRP Renaud & Partner

(56) Entgegenhaltungen:
- EP-A1- 0 636 783
- WO-A1-2004/113110
- DE-A1-102006 044 165
- DE-U1- 20 314 272
- US-A- 6 047 989

## Beschreibung

Die vorliegende Erfindung betrifft eine Befestigungseinrichtung zum Befestigen eines Anbauteils an einem Tragteil, insbesondere eines Kraftfahrzeugs, mit den Merkmalen des Oberbegriffs des Anspruchs 1.

Bei Kraftfahrzeugen, insbesondere bei Nutzfahrzeugen ist es üblich, Anbauteile, wie zum Beispiel Schalldämpfer, Abgasreinigungseinrichtungen, Fahrzeugbatterien, Kraftstofftank und Staubehälter, an einem hierfür geeigneten Tragteil des Fahrzeugs anzubringen. Bevorzugt werden derartige Anbauteile an einem Tragrahmen oder Längsträger des Fahrzeugs montiert. Für die Montage können Befestigungseinrichtungen verwendet werden, um das Anbauen der Anbauteile möglichst einfach zu gestalten.

Aus der WO 2004/113110 A1, welche den nächstliegenden Stand der Technik bildet, ist eine Befestigungseinrichtung zum Befestigen eines Anbauteils an einem Tragteil eines Kraftfahrzeugs bekannt, die eine Einhängeinrichtung aufweist, die ein am Tragteil befestigtes Tragelement, ein am Anbauteil befestigtes Anbauelement und ein Sicherungselement aufweist. Bei der bekannten Befestigungseinrichtung besteht das Anbauelement aus zwei nach unten offenen, übereinander angeordneten Haken, die mit zwei dazu komplementären Gegenhaken zusammenwirken, die das Tragelement aufweist. Das Sicherungselement ist durch eine Schraube gebildet, die den oberen Haken durchsetzt und in den oberen Gegenhaken eingeschraubt ist, wobei ein Kopf der Schraube den oberen Haken mit dem oberen Gegenhaken verspannt.

Die vorliegende Erfindung beschäftigt sich mit dem Problem, für eine Befestigungseinrichtung der eingangs genannten Art eine verbesserte oder zumindest eine andere Ausführungsform anzugeben, die sich insbesondere dadurch auszeichnet, dass sie eine einfache Montage des jeweiligen Anbauteils am Tragteil ermöglicht.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Befestigungseinrichtung mit wenigstens einer Einhängeinrichtung auszustatten, wobei die jeweilige Einhängeinrichtung ein Tragelement, ein Anbauelement und ein Sicherungselement umfasst. Das Tragelement ist im montierten Zustand am Tragteil befestigt, während das Anbauelement im montierten Zustand am Anbauteil befestigt ist. Durch die Ausgestaltung der Einhängeinrichtung kann das Anbauteil am Tragteil eingehängt werden, indem das Anbauelement mit dem zugehörigen Tragelement auf entsprechende Weise zum Einhängen zusammenwirkt. Mit Hilfe des Sicherungselements kann der eingehängte Zustand gesichert werden. Die vorgeschlagene Bauweise führt zu einer extremen Vereinfachung der Montage eines Anbauteils an einem Tragteil. Insbesondere lassen sich Anbauelement und Tragelement separat im Rahmen einer Vormontage am Anbauteil bzw. am Tragteil montieren, so dass relativ viel Montageraum zur Verfügung steht. Der Anbau des Anbauteils am Tragteil erfolgt dann über den vergleichsweise einfach durchführbaren Einhängvorgang, der wenig zusätzlichen Bauraum benötigt.

Erfindungsgemäß ist vorgesehen, das jeweilige Tragelement mit zwei in einer Montagerichtung einseitig offenen, quer zur Montagerichtung voneinander beabstandeten, U-förmigen Aufnahmen auszustatten, zwischen denen ein in der Montagerichtung orientiertes Innengewinde vorgesehen ist. Darüber hinaus weist das jeweilige Anbauelement zwei quer zur Montagerichtung orientierte und quer zur Montagerichtung voneinander beabstandete Bolzenabschnitte auf, die in der Montagerichtung in die Aufnahmen eingehängt werden können. Das jeweilige Sicherungselement kann nun im montierten Zustand die beiden Bolzenabschnitte an der offenen Seite der Aufnahmen quer zur Montagerichtung übergreifen. Dabei ist das jeweilige Sicherungselement mit einem Außengewinde am jeweiligen Tragteil befestigbar. Dieses Außengewinde ist dabei zwischen den beiden Bolzenabschnitten in der Montagerichtung hindurchgeführt oder seitlich daran vorbeigeführt und greift in der Montagerichtung in das Innengewinde des jeweiligen Tragteiles ein. Hierdurch ergibt sich eine relativ einfach herstellbare, effektive Sicherung durch Formschluss des in das Tragelement eingehängten Anbauelements.

Entsprechend einer vorteilhaften Ausführungsform kann die Befestigungseinrichtung zumindest zwei derartige Einhängeinrichtungen aufweisen, die quer zur Montagerichtung voneinander beabstandet angeordnet sind. Zusätzlich kann nun zumindest eine Abstützeinrichtung vorgesehen sein, über die das jeweilige Anbauteil im montierten Zustand in der Montagerichtung beabstandet zur jeweiligen Einhängeinrichtung am Tragteil abgestützt ist. Durch die beiden Einhängeinrichtungen kann in Verbindung mit der einen Abstützeinrichtung eine intensive Fixierung des Anbauteils am Tragteil realisiert werden, die insbesondere auch eine effektive Momentabstützung ermöglicht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

### Es zeigen, jeweils schematisch

- Fig. 1: eine perspektivische Ansicht eines mit Hilfe einer Befestigungsein-richtung an einem Tragteil befestigten Anbauteils,
- Fig. 2: eine perspektivische Ansicht des Anbauteils mit daran angebrach-ten Komponenten der Befestigungseinrichtung,
- Fig. 3: eine perspektivische Ansicht des Tragteils mit daran angebrachten Komponenten der Befestigungseinrichtung,
- Fig. 4: eine Schnittansicht des am Tragteil befestigten Anbauteils im Be-reich einer Einhängeinrichtung der Befestigungseinrichtung,
- Fig. 5: eine vergrößerte Darstellung der geschnittenen Einhängeinrichtung,
- Fig. 6: eine Schnittansicht des am Tragteil befestigten Anbauteils im Be-reich einer Abstützeinrichtung bei einer ersten Ausführungsform,
- Fig. 7: eine vergrößerte Schnittansicht der Abstützeinrichtung aus Fig. 6,
- Fig. 8: eine Schnittdarstellung des am Tragteil befestigten Anbauteils im Bereich der Abstützeinrichtung bei einer zweiten Ausführungsform,
- Fig. 9: eine vergrößerte Schnittansicht der Abstützeinrichtung aus Fig. 8.

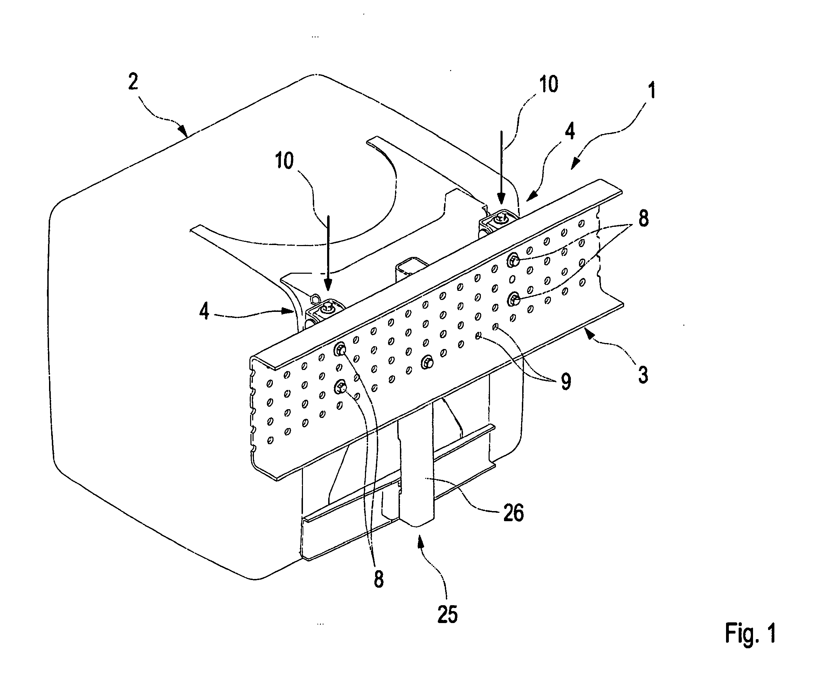

Entsprechend Fig. 1 kann mit Hilfe einer Befestigungseinrichtung 1 ein Anbauteil 2 an einem Tragteil 3 befestigt werden. Grundsätzlich lassen sich mit Hilfe der hier vorgestellten Befestigungseinrichtung 1 beliebige Anbauteile 2 an beliebigen Tragteilen 3 befestigen. Bevorzugt wird die Befestigungseinrichtung 1 jedoch dazu verwendet, ein Fahrzeuganbauteil 2 an einem Fahrzeugtragteil 3 zu befestigen. Beispielsweise handelt es sich beim jeweiligen Anbauteil 2 um ein Gehäuse eines Schalldämpfers oder eines Luftfilters oder eines Staukastens oder einer Abgasreinigungsanlage oder einer Fahrzeugbatterie oder eines Kraftstofftanks. Beim Tragteil 3 handelt es sich beispielsweise um einen Längsträger oder Tragrahmen des jeweiligen Fahrzeugs. Beim Fahrzeug handelt es sich bevorzugt um ein Nutzfahrzeug, wie z.B. ein Lastkraftwagen, und zwar insbesondere um ein Zugfahrzeug oder um einen Anhänger.

Entsprechend den Fig. 1 bis 9 umfasst die Befestigungseinrichtung 1 zumindest eine Einhängeinrichtung 4. Im gezeigten Beispiel sind genau zwei solcher Einhängeinrichtungen 4 vorgesehen. Grundsätzlich können es auch mehr oder weniger als zwei Einhängeinrichtungen 4 sein. Die jeweilige Einhängeinrichtung 4 umfasst jeweils ein Tragelement 5, ein Anbauelement 6 und ein Sicherungselement 7. Das Tragelement 5 ist im montierten Zustand am Tragteil 3 befestigt. Im gezeigten Beispiel kann dies mit Hilfe von entsprechenden Befestigungsschrauben 8 realisiert werden. Die Befestigungsschrauben 8 durchdringen hierzu nicht näher bezeichnete Durchgangsöffnungen, die im Tragteil 3 zu diesem Zweck ausgebildet sind. Im gezeigten Beispiel ist das Tragteil 3 zumindest in dem für die Befestigung des Anbauteils 2 vorgesehenen Bereich mit einem Lochmuster 9 versehen, das eine Vielzahl derartiger Durchgangsöffnungen umfasst, die in einem vorbestimmten Raster relativ zueinander angeordnet sind. Hierdurch ist es insbesondere möglich, die beiden Tragelemente 5 der beiden Einhängeinrichtungen 4 entlang des Tragteils 3 in Abhängigkeit des jeweiligen Anbauteils 2 zu positionieren. Das jeweilige Anbauelement 6 ist im montierten Zustand auf geeignete Weise am Anbauteil 2 befestigt. Hierzu eignet sich beispielsweise eine nicht näher bezeichnete Schweißverbindung oder Lötverbindung. Grundsätzlich kann auch hier eine Verschraubung vorgesehen sein. Ebenso sind Nietverbindungen denkbar.

Das jeweilige Tragelement 5 weist zwei in einer in Fig. 1 durch Pfeile symbolisch dargestellten Montagerichtung 10, die beispielsweise vertikal von oben nach unten orientiert ist, zwei einseitig offene und quer zur Montagerichtung 10 voneinander beabstandete U-förmige Aufnahmen 11 auf. Zwischen diesen Aufnahmen 11 ist ferner bei jedem Tragelement 5 ein Innengewinde 12 angeordnet, das in der Montagerichtung 10 orientiert ist. Zur Realisierung dieses Innengewindes 12 umfasst das jeweilige Tragelement 5 beispielsweise einen Steg 13, der im montierten Zustand quer zur Montagerichtung 10 vom Tragteil 3 absteht und sich insbesondere in einer horizontalen Ebene erstreckt. Ferner befindet sich dieser Steg 13 bezüglich der Montagerichtung 10 nach den Aufnahmen 11, also unterhalb der Aufnahmen 11.

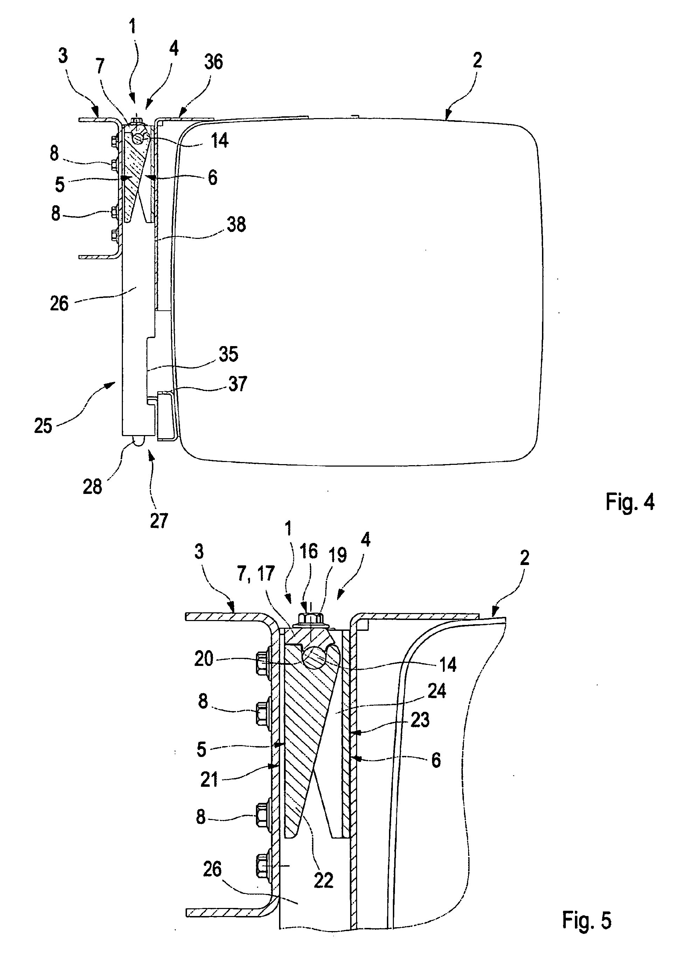

Das jeweilige Anbauelement 6 weist zwei Bolzenabschnitte 14 auf, die jeweils quer zur Montagerichtung 10 orientiert sind und außerdem quer zur Montagerichtung voneinander beabstandet angeordnet sind. Im gezeigten Beispiel sind die beiden Bolzenabschnitte 14 an zwei separaten und voneinander beabstandeten Bolzen ausgebildet. Alternativ können die beiden Bolzenabschnitte 14 auch an einem einzigen, durchgehenden Bolzen ausgestaltet sein. Im montierten Zustand, der insbesondere den Fig. 4 und 5 entnehmbar ist, sind die Bolzenabschnitte 14 in der Montagerichtung 10 in die Aufnahmen 11 eingehängt. Das heißt, der jeweilige Bolzen 14 greift in jeweils eine der Aufnahmen 11 formschlüssig ein. Im gezeigten Beispiel sind die beiden Bolzen 14 des jeweiligen Anbauelements 6 relativ zueinander koaxial angeordnet. Komplementär dazu sind auch die beiden Aufnahmen 11 des jeweiligen Tragelements 5 in der Bolzenlängsrichtung, also quer zur Montagerichtung 10 zueinander fluchtend ausgerichtet.

Das Sicherungselement 7 dient bei der jeweiligen Einhängeinrichtung 4 nun dazu, das am zugehörigen Tragelement 5 eingehängte Anbauelement 6 im eingehängten Zustand zu sichern. Hierzu übergreift das jeweilige Sicherungselement 7 im montierten Zustand die beiden Bolzenabschnitte 14 quer zur Montagerichtung 10, und zwar an der jeweils offenen Seite der jeweiligen Aufnahme 11. Im gezeigten Beispiel sind die Aufnahmen 11 nach oben offen, so dass das jeweilige Sicherungselement 7 die Aufnahmen 11 von oben übergreift. Zusätzlich weist das jeweilige Sicherungselement 7 ein Außengewinde 15 auf, mit dessen Hilfe das jeweilige Sicherungselement 7 am zugehörigen Tragteil 5 befestigt werden kann. Im gezeigten, bevorzugten Beispiel ist das jeweilige Außengewinde 15 an einer Befestigungsschraube 16 ausgebildet, die einen Bestandteil des jeweiligen Sicherungselements 7 bildet. Ferner umfasst das jeweilige Sicherungselement 7 hier einen Sicherungskörper 17. Zum Befestigen des Sicherungselements 7 am zugehörigen Tragteil 5 wird das jeweilige Außengewinde 15, also insbesondere die Befestigungsschraube 16, z.B. zwischen den beiden separaten Bolzen 14 parallel zur Montagerichtung 10 hindurchgeführt. Das Außengewinde 15 wird dann in das Innengewinde 12 des jeweiligen Tragteils eingeführt. Alternativ kann die Befestigungsschraube 16 auch seitlich an einem die beiden Bolzenabschnitte 14 aufweisenden gemeinsamen Bolzen vorbeigeführt sein. Außengewinde 15 und Innengewinde 12 sind zueinander komplementär ausgestaltet, so dass das Außengewinde 15 in das jeweilige Innengewinde 12 formschlüssig eingreifen kann. Mit anderen Worten, die Befestigungsschraube 16 kann im gezeigten Beispiel platzsparend zwischen den Bolzen 14 hindurch in das Innengewinde 14 des jeweiligen Stegs 13 eingeschraubt werden.

Der Sicherungskörper 17 besitzt eine in der Montagerichtung 10 orientierte Durchgangsöffnung 18, durch welche die Befestigungsschraube 16 hindurchführbar ist. Im montierten Zustand stützt sich ein Kopf 19 der jeweiligen Befestigungsschraube 16 an einer von den Bolzenabschnitte 14 abgewandten Seite des Sicherungskörpers 17 am Sicherungskörper 17 in der Montagerichtung 10 ab. Der Sicherungskörper 17 übergreift dabei die Bolzenabschnitte 14 an der jeweiligen offenen Seite der Aufnahmen 11.

Entsprechend der in den Fig. 1 bis 5 gezeigten, bevorzugten Ausführungsform sind die Aufnahmen 11 gegenüber ihrer jeweiligen offenen Seite komplementär zur Außenkontur des jeweiligen Bolzenabschnitts 14 geformt. Im Beispiel haben die Bolzen 14 im Wesentlichen einen Kreisquerschnitt. Dementsprechend sind die Aufnahmenabschnitte 11 gegenüber ihrer offenen Seite halbkreisförmig gestaltet. Grundsätzlich sind jedoch auch andere Formgebungen denkbar. Im Beispiel ist außerdem das Sicherungselement 7 bzw. sein Sicherungskörper 17 mit einer Kontaktkontur 20 ausgestattet, mit der das jeweilige Sicherungselement 7 im montierten Zustand am jeweiligen Bolzenabschnitt 14 anliegt. Dabei ist für jeden Bolzenabschnitt 14 eine zugehörige Kontaktkontur 20 vorgesehen. Zweckmäßig sind die Kontaktkonturen 20 komplementär zu den Außenkonturen der Bolzenabschnitt 14 geformt. Dementsprechend sind die Kontaktkonturen 20 hier kreisbogenförmig ausgestaltet. Ferner sind die Sicherungselemente 7 bzw. deren Sicherungskörper 17 im gezeigten Beispiel so gestaltet, dass sie im montierten Zustand die offenen Seiten der Aufnahmen 11 verschließen. Hierzu kann das jeweilige Sicherungselement 7 im Bereich seiner Kontaktkonturen 20 in der Montagerichtung 10 in die jeweilige Aufnahme 11 eingreifen.

In dem in den Fig. 1 bis 5 gezeigten Beispiel besitzt das jeweilige Tragelement 5 eine Tragbasis 21 sowie zwei davon abstehende Tragwangen 22. Die Tragbasis 21 ist im montierten Zustand am Tragteil 3 befestigt und erstreckt sich parallel zu einer Ebene des Tragteils 3. Im Unterschied dazu erstrecken sich die Tragwangen 22 senkrecht zur Ebene des Tragteils 3 und weisen jeweils eine der Aufnahmen 11 auf. Das Tragelement 5 kann dabei als Blechformteil ausgestaltet sein. Analog dazu kann das jeweilige Anbauelement 5 eine Anbaubasis 23 und zwei davon abstehende Anbauwangen 24 aufweisen. Die Anbaubasis 23 ist im montierten Zustand am Anbauteil 2 befestigt und kann sich ebenfalls in einer Ebene erstrecken, die parallel zur Montagerichtung 10 verläuft. Zweckmäßig erstreckt sich die Anbaubasis 23 parallel zur Tragbasis 21. Im Unterschied dazu erstrecken sich die Anbauwangen 24 quer zur Ebene der Anbaubasis 23 und weisen jeweils einen der Bolzenabschnitte 14 auf. Die Tragwangen 22 und die Anbauwangen 24 sind jeweils quer zur Montagerichtung 10 voneinander beabstandet angeordnet, wobei die Abstände der einzelnen Wangen 21, 24 so aufeinander abgestimmt sind, dass im montierten Zustand die Tragwangen 22 zwischen den an Anbauwangen 24 angeordnet sind.

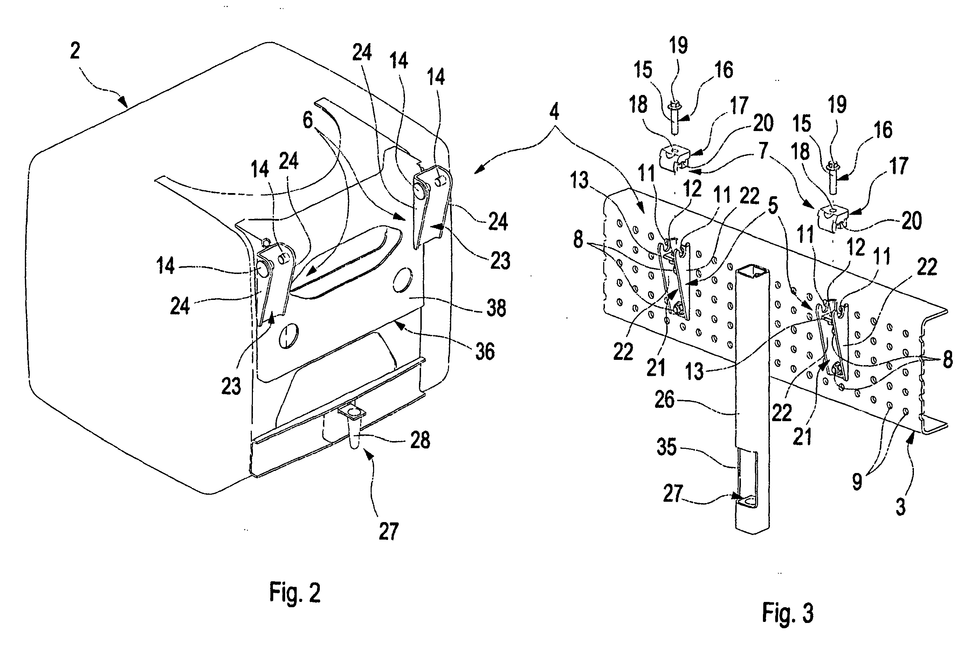

Der in Fig. 3 erkennbare Steg 13 kann integral an der jeweiligen Tragbasis 21 ausgeformt sein, wobei er sich in einer Ebene erstreckt, die quer zur Montagerichtung 10 verläuft.

Entsprechend den Fig. 1 bis 10 umfasst die Befestigungseinrichtung 1 bei der hier gezeigten, bevorzugten Ausführungsform außerdem zumindest eine Abstützeinrichtung 25. Im Beispiel ist genau eine solche Abstützeinrichtung 25 vorgesehen, die, bevorzugt mittig, zwischen den beiden Einhängeinrichtungen 4 angeordnet ist. Grundsätzlich sind jedoch auch mehrere Abstützeinrichtungen 25 denkbar. Über die jeweilige Abstützeinrichtung 25 ist das Anbauteil 2 im montierten Zustand am Tragteil 3 indirekt abgestützt, und zwar in der Montagerichtung 10 beabstandet zu den Einhängeinrichtungen 4. Im gezeigten Beispiel weist die Abstützeinrichtung 25 einen Träger 26 auf, der sich parallel zur Montagerichtung 10 erstreckt. Dieser Träger 26 ist einerseits am Tragteil 3 befestigt. Hierzu kann der Träger 26 beispielsweise unter Ausnutzung des Lochmusters 9 am Tragteil 3 verschraubt sein. Grundsätzlich sind auch andere Befestigungstechniken denkbar. Andererseits ist besagter Träger 26 über eine Kopplungseinrichtung 27 mit dem jeweiligen Anbauteil 2 indirekt verbunden, wenn das Anbauteil 2 über die Befestigungseinrichtung 1 am Tragteil 3 befestigt ist.

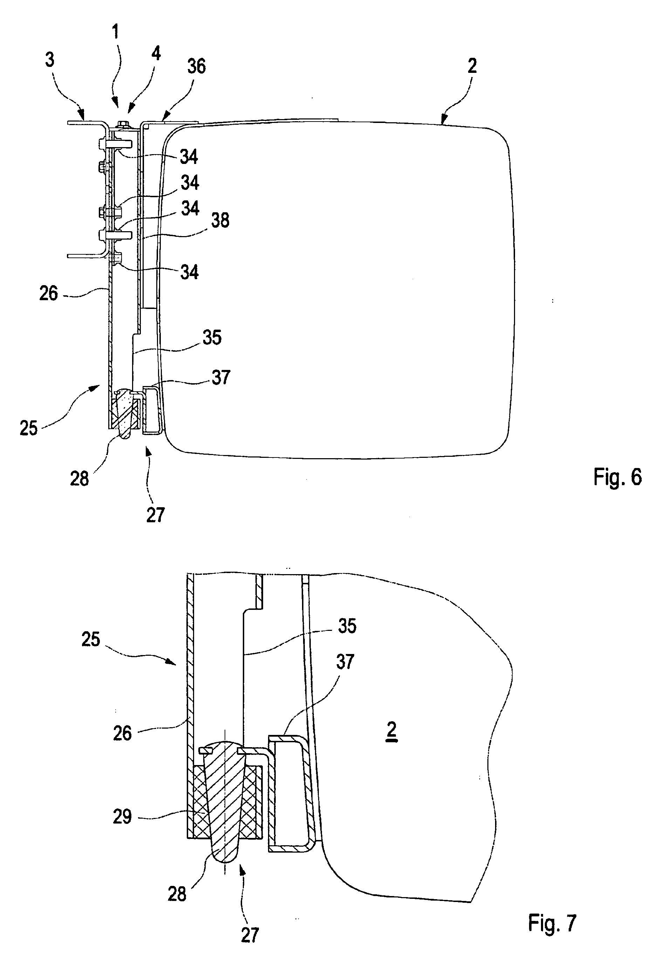

Entsprechend der in den Fig. 6 und 7 gezeigten Ausführungsform kann die genannte Kopplungseinrichtung 27 einen Zapfen 28 aufweisen, der auf geeignete Weise am Anbauteil 2 befestigt ist. Ferner umfasst die Kopplungseinrichtung 27 eine zum Zapfen 28 komplementäre Zapfenaufnahme 29. Die Zapfenaufnahme 29 ist auf geeignete Weise am Träger 26 ausgebildet. Im montierten Zustand ist der Zapfen 28, der sich in der Montagerichtung 10 erstreckt, in der Montagerichtung 10 in die Zapfenaufnahme 29 eingesteckt. Zumindest eines der Bauteile Zapfen 28 und Zapfenaufnahme 29 kann aus einem gummielastischen Material, insbesondere aus einem Dämpfermaterial hergestellt sein. Hierdurch kann die Befestigungseinrichtung 1 zusätzlich eine intensive Schwingungsdämpfung realisieren, da insbesondere bei einem Fahrzeug das am Tragteil 3 montierte Anbauteil 2 ein schwingungsfähiges System bilden kann.

Im gezeigten Beispiel ist der Zapfen 28 konisch ausgestaltet, derart, dass er sich in der Montagerichtung 10 verjüngt. Die Zapfenaufnahme 29 ist dazu komplementär ausgestaltet und dementsprechend ebenfalls konisch geformt.

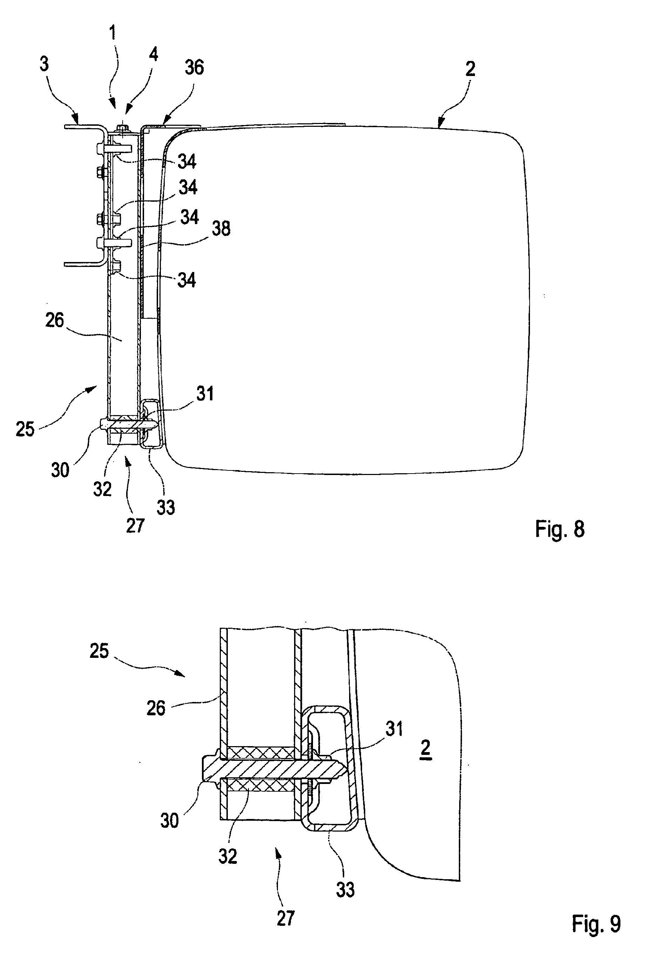

Bei der in den Figuren 8 und 9 gezeigten Ausführungsform ist die Kopplungseinrichtung 27 als Anschraubstelle ausgestaltet. Dabei greift eine Schraube 30 in eine Mutter 31 ein. Die Mutter 31 ist am Anbauteil 2 angebracht und die Schraube 30 durchsetzt den Träger 26. Im Träger 26 ist im Beispiel der Fig. 8 und 9 eine Hülse 32 angeordnet, die von der Schraube 30 koaxial durchsetzt ist. Die Mutter 31 kann grundsätzlich auf beliebige Weise am Anbauteil 2 angebracht oder angeordnet sein. Beispielsweise kann es sich um eine Schweißmutter handeln, die auf geeignete Weise am Anbauteil 2 direkt oder indirekt angeschweißt ist. Im gezeigten Beispiel ist jedoch am Anbauteil 2 ein Käfig 33 ausgebildet, in dem die Mutter 31 angeordnet ist. Insoweit handelt es sich hierbei um eine Käfigmutter. Der Käfig 33 ist dabei so ausgestaltet, dass die Mutter 31 einfach darin einsetzbar ist und darin drehfest angeordnet ist.

Der Träger 26 ist in den gezeigten Ausführungsformen als Rohrkörper ausgestaltet, insbesondere als Vierkantrohr. Er ist in der Montagerichtung 10 größer dimensioniert als das Tragteil 3, steht also in der Montagerichtung 10 über das Tragteil 3 über. Insbesondere ist der Träger 26 an die in der Montagerichtung 10 gemessene Höhe des Anbauteils 2 angepasst. Zur vereinfachten Befestigung des Trägers 26 am Tragteil 3 können am Träger 26 vorbereitete Innengewinde ausgebildet sein. Diese sind entsprechend Fig. 6 beispielsweise mittels Schweißmuttern 34 realisiert, die an der Innenseite des Rohrkörpers angeordnet sind.

Bei der in den Fig. 3 bis 7 gezeigten Ausführungsform ist der als Rohrkörper ausgestaltete Träger 26 mit einem Fenster 35 versehen, das einen Eingriff für den Zapfen 28 ermöglicht.

Zur vereinfachten Vormontage der Anbauelemente 6 am Anbauteil 2 kann das Anbauteil 2 mit einer Konsole 36 versehen werden, die beispielsweise am Anbauteil 2 angeschweißt ist oder auf andere geeignete Weise daran befestigt ist. An dieser Konsole 36 sind die beiden Anbauelemente 6 auf geeignete Weise befestigt. Des Weiteren kann der Zapfen 28 mittels eines entsprechenden Zapfenträgers 37 an dieser Konsole 36 befestigt sein. Ebenso kann der genannte Käfig 33 an besagter Konsole 36 befestigt sein. Ferner kann die Konsole 36 eine Anlagekontur 38 aufweisen, die so auf die Befestigungseinrichtung 1 abgestimmt ist, dass der Träger 26 im montierten Zustand an dieser Anlagekontur 38 zur Anlage kommt. Hierdurch kann sich das Anbauteil 2 über den Träger 26 am Tragteil 3 abstützen. Hierdurch kann die mit Hilfe der Abstützeinrichtung 25 realisierbare Momentenabstützung zwischen Anbauteil 2 und Tragteil 3 verbessert werden.

Für die Montage des Anbauteils 2 am Tragteil 3 ergibt sich mit Hilfe der hier vorgestellten Befestigungseinrichtung 1 folgendes Vorgehensweise:
Zunächst werden im Rahmen einer Vormontage die Tragelemente 5 und der Träger 26 am Tragteil 3 befestigt. Je nach Dimension des anzubauenden Anbauteils 2 können dabei die Abstände und Positionen der Anbauelemente 5 sowie des Trägers 26 variieren. Ebenso kann die Länge des Trägers 26 in Abhängigkeit der Dimension des anzubauenden Anbauteils 2 variieren. Außerdem werden im Rahmen der Vormontage die Anbauelemente 6 am jeweiligen Anbauteil 2 angebracht ebenso wie der anbauteilseitige Bestandteil der Abstützeinrichtung 25, wie zum Beispiel der Zapfen 28 oder die Mutter 31. Hierzu kann die Konsole 36 verwendet werden.
Für die Montage des Anbauteils 2 am Tragteil 3 muss nun das Anbauteil über die Bolzenabschnitte 14 der Anbauelemente 6 in die Aufnahmen 11 der Tragelemente 5 am Tragteil 3 eingehängt werden. Bei Verwendung des Zapfens 28 muss hierbei zuvor der Zapfen 28 durch das Fenster 35 in den hohlen Träger 26 eingeführt werden. Mit dem Einhängen der Bolzenabschnitte 14 in die Aufnahmen 11 wird auch der Zapfen 28 in die Zapfenaufnahme 29 eingeführt. Bei der Verwendung der Anschraubstelle als Kopplungseinrichtung 27 kann das Anbauteil 2 auch schräg am Tragteil 3 eingehängt werden. Die im Querschnitt kreisförmigen Bolzenabschnitte 14 ermöglichen dann ein Verschwenken des eingehängten Tragteils 2 um die Längsachse der Bolzenabschnitte 14. Hierdurch kommt der Träger 26 zum Beispiel am Käfig 33 zur Anlage, so dass dann die Schraube 30 mit der Mutter 31 verschraubt werden kann. Nach dem Einhängen des Anbauteils 2 am Tragteil 3 werden die Sicherungselemente 7 montiert. Hierzu werden die Sicherungskörper 17 auf die Bolzenabschnitte 14 aufgesetzt und mit Hilfe der jeweiligen Befestigungsschraube 16 am jeweiligen Tragelement 5 befestigt.
Die Montage sowie die gegebenenfalls erforderliche Demontage des Anbauteils 2 benötigt durch die Verwendung der hier vorgestellten Befestigungseinrichtung 1 vergleichsweise wenig Montageraum, was die Montage und Demontage erheblich vereinfacht.

## Patentansprüche

1. Befestigungseinrichtung zum Befestigen eines Anbauteils (2) an einem Tragteil (3), insbesondere eines Kraftfahrzeugs, mit wenigstens einer Einhängeinrichtung (4), die ein am Tragteil (3) befestigtes oder befestigbares Tragelement (5), ein am Anbauteil (2) befestigtes oder befestigbares Anbauelement (6) und ein Sicherungselement (7) aufweist,
**dadurch gekennzeichnet,**
- **dass** das jeweilige Tragelement (5) zwei in einer Montagerichtung (10) einseitig offene, quer zur Montagerichtung (10) voneinander beabstandete, U-förmige Aufnahmen (11) und ein zwischen den Aufnahmen (11) angeordnetes, in der Montagerichtung (10) orientiertes Innengewinde (12) aufweist,
- **dass** das jeweilige Anbauelement (6) zwei quer zur Montagerichtung (10) orientierte und quer zur Montagerichtung (10) voneinander beabstandete Bolzenabschnitte (14) aufweist, die in der Montagerichtung (10) in die Aufnahmen (11) eingehängt oder einhängbar sind,
- **dass** das jeweilige Sicherungselement (7) im montierten Zustand die beiden Bolzenabschnitte (14) an der offenen Seite der Aufnahmen (11) quer zur Montagerichtung (10) übergreift und mit einem Außengewinde (15) am jeweiligen Tragteil (5) befestigt ist,
- **dass** das jeweilige Außengewinde (15) zwischen den beiden Bolzenabschnitten (14) in der Montagerichtung (10) hindurchgeführt oder an den Bolzenabschnitten (14) in der Montagerichtung (10) vorbeigeführt ist und in der Montagerichtung (10) in das Innengewinde (12) des jeweiligen Tragteils (5) eingreift.

2. Befestigungseinrichtung nach Anspruch 1,
**dadurch gekennzeichnet,**
- **dass** das jeweilige Sicherungselement (7) einen Sicherungskörper (17) und eine Befestigungsschraube (16) aufweist,
- **dass** der Sicherungskörper (17) im montierten Zustand die Bolzenabschnitte (14) überdeckt und eine in der Montagerichtung (10) orientierte Durchgangsöffnung (18) aufweist,
- **dass** die Befestigungsschraube (16) das Außengewinde (15) des Sicherungselements (7) aufweist und durch die Durchgangsöffnung (18) hindurch in das Innengewinde (12) des jeweiligen Anbauelements (5) einführbar ist,
- **dass** ein Kopf (19) der Befestigungsschraube (16) im montierten Zustand an einer von den Bolzenabschnitten (14) abgewandten Seite des Sicherungskörpers (17) in der Montagerichtung (10) abgestützt ist.

3. Befestigungseinrichtung nach Anspruch 1 oder 2,
**dadurch gekennzeichnet,**
**dass** die jeweilige Aufnahme (11) gegenüber ihrer offenen Seite komplementär zum jeweiligen Bolzenabschnitt (14) geformt ist.

4. Befestigungseinrichtung nach einem der Ansprüche 1 bis 3,
**dadurch gekennzeichnet,**
**dass** das jeweilige Sicherungselement (7) im montierten Zustand an den Bolzenabschnitten (14) in der Montagerichtung (10) jeweils mit mindestens einer Kontaktkontur (20) anliegt, die insbesondere komplementär zu dem jeweiligen Bolzenabschnitt (14) geformt sein kann.

5. Befestigungseinrichtung nach einem der Ansprüche 1 bis 4,
**dadurch gekennzeichnet,**
**dass** das jeweilige Sicherungselement (7) im montierten Zustand die offenen Seiten der Aufnahmen (11) des jeweiligen Tragelements (5) verschließt.

6. Befestigungseinrichtung nach einem der Ansprüche 1 bis 5,
**dadurch gekennzeichnet,**
**dass** das jeweilige Tragelement (5) eine am Tragteil (3) befestigte oder befestigbare Tragbasis (21) und zwei davon abstehende, quer zur Montagerichtung (10) voneinander beabstandete Tragwangen (22) aufweist, welche die Aufnahmen (11) aufweisen.

7. Befestigungseinrichtung nach einem der Ansprüche 1 bis 6,
**dadurch gekennzeichnet,**
**dass** das jeweilige Anbauelement (6) eine am Anbauteil (2) befestigte oder befestigbare Anbaubasis (23) und zwei davon abstehende, quer zur Montagerichtung (10) voneinander beabstandete Anbauwangen (24) aufweist, welche die Bolzenabschnitte (14) aufweisen.

8. Befestigungseinrichtung nach den Ansprüchen 6 und 7,
**dadurch gekennzeichnet,**
**dass** die Tragwangen (22) im montierten Zustand zwischen den Anbauwangen (24) angeordnet sind.

9. Befestigungseinrichtung nach einem der Ansprüche 1 bis 8,
**dadurch gekennzeichnet,**
**dass** zumindest zwei Einhängeeinrichtungen (4) vorgesehen sind, die quer zur Montagerichtung (10) voneinander beabstandet angeordnet sind.

10. Befestigungseinrichtung nach einem der Ansprüche 1 bis 9,
**dadurch gekennzeichnet,**
**dass** zumindest eine Abstützeinrichtung (25) vorgesehen ist, über die das jeweilige Anbauteil (2) im montierten Zustand in der Montagerichtung (10) beabstandet zur jeweiligen Einhängeinrichtung (4) am Tragteil (3) abgestützt ist.

11. Befestigungseinrichtung nach den Ansprüchen 9 und 10,
**dadurch gekennzeichnet,**
**dass** die jeweilige Abstützeinrichtung (25) quer zur Montagerichtung (10), insbesondere mittig, zwischen zwei Einhängeinrichtungen (4) angeordnet ist.

12. Befestigungseinrichtung nach Anspruch 10 oder 11,
**dadurch gekennzeichnet,**
**dass** die jeweilige Abstützeinrichtung (25) einen sich in der Montagerichtung (10) erstreckenden Träger (26) aufweist, der einerseits am Tragteil (3) befestigt oder befestigbar ist und der andererseits über eine Kopplungseinrichtung (27) mit dem Anbauteil (2) verbunden oder verbindbar ist.

13. Befestigungseinrichtung nach Anspruch 12.
**dadurch gekennzeichnet,**
**dass** die Kopplungseinrichtung (27) einen am Anbauteil (2) befestigten, sich in der Montagerichtung (10) erstreckenden Zapfen (28) und eine am Träger (26) ausgebildete, dazu komplementäre Zapfenaufnahme (29) aufweist, in die der Zapfen (28) in der Montagerichtung (10) eingesteckt oder einsteckbar ist.

14. Befestigungseinrichtung nach Anspruch 12,
**dadurch gekennzeichnet,**
**dass** die Kopplungseinrichtung (27) als Anschraubstelle ausgestaltet ist.

## Claims

1. A fastening device for fastening an attachment part (2) to a support part (3), in particular of a motor vehicle, with at least one hooking-in facility (4), comprising a support element (5) that is fastened or can be fastened to the support part (3), an attachment element (6) that is fastened or can be fastened to the attachment part (2) and a securing element (7),
**characterized in that**
- the respective support element (5) comprises two U-shaped receptacles (11) which on one side are open in an assembly direction (10) and spaced from one another transversely to the assembly direction (10) and comprises an internal thread (12) arranged between the receptacles (11) and orientated in the assembly direction (10),
- the respective attachment element (6) comprises two pin sections (14) which are orientated transversely to the assembly direction (10) and are spaced from one another transversely to the assembly direction (10), which are hooked or can be hooked into the receptacles (11) in the assembly direction (10),
- the respective securing element (7) engages over the two pin sections (14) in the assembled state on the open side of the receptacles (11) transversely to the assembly direction (10) and is fastened to the respective support part (5) with an external thread (15),
- the respective external thread (15) is passed through the two pin sections (14) in the assembly direction (10) or guided passed the pin sections (14) in the assembly direction (10) and engages in the internal thread (12) of the respective support part (5) in the assembly direction (10).

2. The fastening device according to Claim 1, **characterized in that**
- the respective securing element (7) comprises a securing body (17) and a fastening screw (16),
- the securing body (17) in the assembled state covers the pin sections (14) and comprises a passage opening (18) orientated in the assembly direction (10),
- the fastening screw (16) comprises the external thread (15) of the securing element (7) and can be inserted through the passage opening (18) in the internal thread (12) of the respective attachment element (5),
- a head (19) of the fastening screw (16) in the assembled state is supported on a side of the securing body (17) facing away from the pin sections (14) in the assembly direction (10).

3. The fastening device according to Claim 1 or 2,
**characterized in that**
the respective receptacle (11) is shaped complementarily to the respective pin section (14) relative to its open side.

4. The fastening device according to any one of the Claims 1 to 3,
**characterized in that**
the respective securing element (7) in the assembled state bears against the end sections (14) in the assembly direction (10) in each case with at least one contact contour (20), which in particular can be shaped complementarily to the respective end section (14).

5. The fastening device according to any one of the Claims 1 to 4,
**characterized in that**
the respective securing element (7) in the assembled state closes off the open sides of the receptacles (11) of the respective support element (5).

6. The fastening device according to any one of the Claims 1 to 5,
**characterized in that**
the respective support element (5) comprises a support base (21) that is fastened or can be fastened to the support part (3) and two support cheeks (22) spaced from each other transversely to the assembly direction (10), which comprise the receptacles (11).

7. The fastening device according to any one of the Claims 1 to 6,
**characterized in that**
the respective attachment element (6) comprises an attachment base (23) that is or can be fastened to the attachment part (2) and two attachment cheeks (24) which stand away there from, and are spaced from one another transversely to the assembly direction (10), which comprise the pin sections (14).

8. The fastening device according to the Claims 6 and 7,
**characterized in that**
the support cheeks (22) in the assembled state are arranged between the attachment cheeks (24).

9. The fastening device according to any one of the Claims 1 to 8,
**characterized in that**
at least two hooking-in devices (4) are provided, which are arranged transversely spaced from one another in the assembly direction (10).

10. The fastening device according to any one of the Claims 1 to 9,
**characterized in that**
at least one support facility (25) is provided, via which the respective attachment part (2) in the assembled state is supported on the support part (3) in the assembly direction (10) spaced from the respective hooking-in device (4).

11. The fastening device according to the Claims 9 and 10,
**characterized in that**
the respective support device (25) is arranged transversely to the assembly direction (10), in particular in the middle, between two hooking-in devices (4).

12. The fastening device according to Claim 10 or 11,
**characterized in that**
the respective support device (25) comprises a carrier (26) extending in the assembly direction (10), which on the one side is fastened or can be fastened to the support part (3) and on the other side is connected or can be connected via a coupling device (27) to the attachment part (2).

13. The fastening device according to Claim 12,
**characterized in that**
the coupling device (27) comprises a pin (28) fastened to the attachment part (2) which extends in the assembly direction (10) and a pin receptacle (29) formed on the carrier (26) complementarily thereto, into which the pin (28) is inserted or can be inserted in the assembly direction (10).

14. The fastening device according to Claim 12,
**characterized in that**
the coupling device (27) is configured as screw-on point.

## Revendications

1. Système de fixation pour la fixation d'une partie rapportée (2) sur une partie portante (3), en particulier d'un véhicule automobile, comprenant au moins un dispositif d'accrochage (4), qui présente un élément porteur (5) fixé ou pouvant être fixé sur la partie portante (3), un élément rapporté (6) fixé ou pouvant être fixé sur la partie rapportée (2) et un élément de blocage (7),
**caractérisé**
- **en ce que** l'élément porteur (5) respectif présente deux logements (11) ouverts sur un côté dans un sens de montage (10), espacés l'un de l'autre transversalement au sens de montage (10) et en forme de U et un filetage intérieur (12) disposé entre les logements (11) et orienté dans le sens de montage (10),
- **en ce que** l'élément rapporté (6) respectif présente deux parties de boulon (14) orientées transversalement au sens de montage (10) et espacées l'une de l'autre transversalement au sens de montage (10), lesquelles parties sont accrochées ou peuvent être accrochées dans le sens de montage (10) dans les logements (11),
- **en ce que** l'élément de blocage (7) respectif recouvre dans l'état monté les deux parties de boulon (14) sur le côté ouvert des logements (11) transversalement au sens de montage (10) et est fixé par un filetage extérieur (15) sur la partie portante (5) respective,
- **en ce que** le filetage extérieur (15) respectif est guidé en traversant entre les deux parties de boulon (14) dans le sens de montage (10) ou est guidé dans le sens de montage (10) en passant devant les parties de boulon (14) et s'engage dans le sens de montage (10) dans le filetage intérieur (12) de la partie portante (5) respective.

2. Système de fixation selon la revendication 1,
**caractérisé**
- **en ce que** l'élément de blocage (7) respectif présente un corps de blocage (17) et une vis de fixation (16),
- **en ce que** le corps de blocage (17) recouvre les parties de boulon (14) dans l'état monté et présente une ouverture de passage (18) orientée dans le sens de montage (10),
- **en ce que** la vis de fixation (16) présente le filetage extérieur (15) de l'élément de blocage (7) et peut être introduite à travers l'ouverture de passage (18) dans le filetage intérieur (12) de l'élément rapporté (5) respectif,
- **en ce qu'**une tête (19) de la vis de fixation (16) est soutenue dans l'état monté sur un côté, opposé aux parties de boulon (14), du corps de blocage (17) dans le sens de montage (10).

3. Système de fixation selon la revendication 1 ou 2,
**caractérisé**
**en ce que** le logement (11) respectif est formé par rapport à son côté ouvert de façon complémentaire à la partie de boulon (14) respective.

4. Système de fixation selon l'une des revendications 1 à 3,
**caractérisé**
**en ce que** l'élément de blocage (7) respectif s'appuie dans l'état monté sur les parties de boulon (14) dans le sens de montage (10) respectivement avec au moins un contour de contact (20), qui peut être formé en particulier de façon complémentaire à la partie de boulon (14) respective.

5. Système de fixation selon l'une des revendications 1 à 4,
**caractérisé**
**en ce que** l'élément de blocage (7) respectif ferme dans l'état monté les côtés ouverts des logements (11) de l'élément porteur (5) respectif.

6. Système de fixation selon l'une des revendications 1 à 5,
**caractérisé**
**en ce que** l'élément porteur (5) respectif présente une base portante (21) fixée ou pouvant être fixée sur la partie portante (3) et deux joues portantes (22) dépassant de cette base et espacées l'une de l'autre transversalement au sens de montage (10), lesquelles joues présentent les logements (11).

7. Système de fixation selon l'une des revendications 1 à 6,
**caractérisé**
**en ce que** l'élément rapporté (6) respectif présente une base rapportée (23) fixée ou pouvant être fixée sur la partie rapportée (2) et présente deux joues rapportées (24) dépassant de cette base et espacées l'une de l'autre transversalement au sens de montage (10), lesquelles joues présentent les parties de boulon (14).

8. Système de fixation selon les revendications 6 et 7,
**caractérisé**
**en ce que** les joues portantes (22) sont disposées dans l'état monté entre les joues rapportées (24).

9. Système de fixation selon l'une des revendications 1 à 8,
**caractérisé**
**en ce qu'**au moins deux systèmes d'accrochage (4) sont prévus, lesquels sont disposés à distance l'une de l'autre transversalement au sens de montage (10).

10. Système de fixation selon l'une des revendications 1 à 9,
**caractérisé**
**en ce qu'**au moins un système de soutien (25) est prévu, par lequel la partie rapportée (2) respective est soutenue sur la partie portante (3) dans l'état monté, dans le sens de montage (10), à distance du système d'accrochage (4) respectif.

11. Système de fixation selon les revendications 9 et 10,
**caractérisé**
**en ce que** le système de soutien (25) respectif est disposé transversalement au sens de montage (10), en particulier au centre, entre deux systèmes d'accrochage (4).

12. Système de fixation selon la revendication 10 ou 11,
**caractérisé**
**en ce que** le système de soutien (25) respectif présente un support (26) s'étendant dans le sens de montage (10), lequel support d'une part est fixé ou peut être fixé sur la partie portante (3) et d'autre part est relié ou peut être relié par un système d'accouplement (27) à la partie rapportée (2).

13. Système de fixation selon la revendication 12,
**caractérisé**
**en ce que** le système d'accouplement (27) présente un tenon (28) fixé sur la partie rapportée (2), s'étendant dans le sens de montage (10), et un logement de tenon (29) conçu sur le support (26) et complémentaire par rapport à celui-ci, logement dans lequel le tenon (28) est enfiché ou peut être enfiché dans le sens de montage (10).

14. Système de fixation selon la revendication 12,
**caractérisé**
**en ce que** le système d'accouplement (27) est conçu comme point de vissage.
